# EUROPEAN PATENT SPECIFICATION

(11) **EP 1 275 943 B1**
(45) Date of publication and mention of the grant of the patent: **29.03.2006**
(21) Application number: 02447132.8
(22) Date of filing: 11.07.2002
(51) Int. Cl.: G01G 19/12, G01G 21/23

(54) **Device for weighing a load**
Gerät zum Wiegen einer Ladung
Dispositif mobile pour peser une charge

(30) Priority: 11.07.2001 BE 200100470; 08.10.2001 BE 200100655
(43) Date of publication of application: 15.01.2003
(73) Proprietor: PM On Board Ltd., Shipley, West Yorkshire BD2 1AG (GB)
(72) Inventor: Nuyts, Ludo, 2360 Oud-Turnhout (BE)
(74) Representative: Van Malderen, Joelle

(56) References cited:
- EP-A- 0 476 778
- EP-A- 0 611 957
- EP-A- 0 952 436
- US-A- 5 773 768

## Description

### Field of the invention

The present invention is related to installations for weighing loads. In particular, the invention is related to a device comprising a supporting structure or base frame and a weighing structure connected to said frame through a number of load cells. A prime application of this kind of structures is their use in mobile weighing systems.

### State of the art

Weighing systems exist, wherein a supporting structure, which we will also call a `frame' or 'base frame' in this text, fixed to the ground or to a truck, is present. A weighing structure, for example a rectangular platform is suspended from this frame, or is resting on the frame wherein the load exerted by the weighing structure (and the weight placed on it) on the frame is measured by load cells, which are subjected to the forces applied by the weight. The present invention is in particular related to load cells which are of the 'beam' type. These have an elongated shape, wherein one part is connected to the frame, and the other to the weighing structure, so that the load exerts a bending or shear force on the cell, the latter being equipped with the proper means, such as strain gages and the like, for producing a signal which is equivalent to the load force.

It is known to use universal joints, e.g. ball joints in the connection points between the base frame and the load cell on the one hand and between the load cell and the weighing structure on the other. These joints allow a measurement to be performed even if the load is in a slightly tilted position. This is described for example in the documents EP-A-476778 and EP-A-603950. For evident reasons, the use of universal joints is especially useful in mobile weighing systems. However, the existing designs show deficiencies, which will be described in more detail in the following paragraph, with reference to a number of drawings. In general, it can be said that the deformation of the load cell is taking place in an undesirable way, leading to problems of inaccuracy of the measurement. The same problem is exemplefied by the device disclosed in document US-A-5773768. The load cell assembly disclosed in document EP-A-952436 is adapted for use with a fixed structure, and cannot be readily used in a mobile weighing system.

### Aims of the invention

The present invention aims to provide a weighing device equipped with load cells, preferably connected by universal joints to a supporting structure and to a weighing structure, which allows an improved accuracy of the measurement.

### Summary of the invention

The present invention is related to a device for weighing a load, comprising a supporting structure, a weighing structure, and one or more beam type load cells, each load cell comprising a first part and a second part, with a separating section between both of said parts, one of said parts being connected to said supporting structure while the other of said parts is connected to said weighing structure, at least one load cell being attached to an auxiliary element, said element comprising :
- a base plate to which the first part of said load cell is rigidly connected,
- two side walls, rigidly connected to said base plate, and being placed on either side of said load cell, when the load cell is attached to said element
characterized in that said auxiliary element further comprises a means for connecting said element to said supporting structure or to said weighing structure in a point which is placed on the side of said separating section which is opposite said first part.

Said means for connecting said element may comprise a pair of holes in said side walls, the line connecting the centre points of said holes being placed on the side of said separating section which is opposite said first part.

Alternatively, said means for connecting said element may comprise a solid block connecting said walls, said block comprising a cylindrical hole, the centre line of said hole being placed on the side of said separating section which is opposite said first part.

A second auxiliary element may be rigidly connected to said second part of said load cell.

The first auxiliary element may be connected to said supporting structure or to said weighing structure by a universal joint. Also, said second auxiliary element may be connected to said supporting structure or to said weighing structure by a universal joint.

According to one embodiment, said load cell comprises a bore in said second part, the centre line of said bore being essentially horizontal when said load cell is placed onto said base plate in an essentially horizontal position. Said load cell may be connected to said supporting structure or to said weighing structure by a universal joint.

The load cell is preferably bolted to said base plate, by two or more bolts.

The first auxiliary element and said load cell may form a homogenous block.

The invention is equally related to an auxiliary element for use as a supporting element of a load cell of the beam type, said load cell comprising a first part and a second part, with a separating section in between, said element comprising :
- a base plate to which the first part of said load cell is to be rigidly connected,
- two side walls, rigidly connected to said base plate, and being placed on either side of said load cell, when the load cell is attached to said element,
characterized in that said auxiliary element further comprises a means for connecting said element to a supporting structure or to a weighing structure in a point which is placed on the aide of said separating section which is opposite said first part.

### Short description of the drawings

Fig. 1 represents the type of load cell to which the present invention is related.

Fig. 2 and 3 represent prior art designs of load cell fixtures.

Fig. 4 represents a first embodiment of the present invention.

Fig. 5 represents a view of a first auxiliary element which is characteristic to the invention.

Fig. 6 represents a second embodiment of the invention.

### Detailed description of the invention

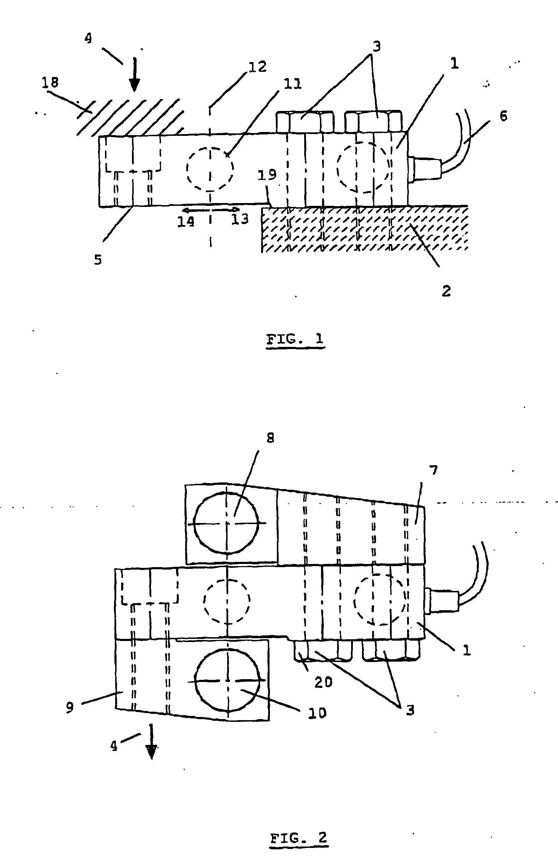

Figure 1 illustrates the type of load cell 1, to which the present invention is related. It is a load cell of the beam type. This type of load cell has the shape of an elongated beam, which is subjected to the load to be measured, said load causing a bending or shearing force to be exerted on the load cell. Most load cells of this type comprise a cavity 11, thereby creating a weakened section 12. It can be said that the load cell 1 comprises a first part 13, to the right of section 12, and a second part 14, to the left of section 12. Even if no weakened section is present, a load cell can generally be divided into two parts, separated by a section, wherein one part is connected to the supporting structure 2, while the other is connected to the weighing structure 18. In this way, the load cell is subjected during weighing to a bending or shear force. In figure 1, the load cell is fixed at the first part 13 to the supporting structure 2, by two bolts 3. The second part 14 carries the weighing structure 18, which exerts a downward-force 4 on the load cell 1.

A weighing device usually comprises several of such load cells, supporting a weighing structure in a number of force introduction points, for example in the four corners of a rectangular weighing platform.
A hole 5 may be present in order to fix the weighing structure 18 to the cell. Strain gages are present, preferably in the cavity 11, for producing a signal which is related to the bending force. Through connection 6, the signal is transmitted to the measurement equipment (not shown). Most load cells of this type have a jump 19 in the thickness of the cell, which allows a deformation of the part to the left of this jump, even if the supporting structure 2 extends underneath the whole of the load cell 1.

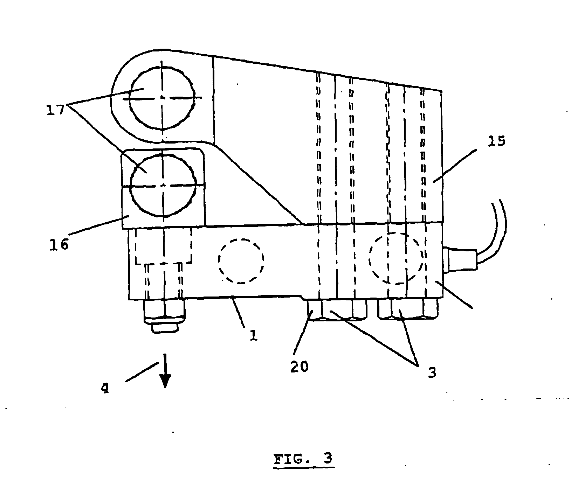

Figures 2 and 3 show prior art examples of how such a load cell may be implemented, in particular in case a tilted position of the supporting structure 2 is to be allowed. In figure 2, the cell is clamped to a first auxiliary element 7, by the two bolts 3. The first element 7 is connected to the supporting structure at point 8, through a universal joint (not shown). A second auxiliary element 9 is bolted to the load cell at the latter's other extremity, and the weighing structure is connected to the element 9 at point 10, through another universal joint. The weighing structure is thus suspended from the base frame, and the load force 4 of the weight bends the load cell downwards.

Figure 3 shows an alternative, wherein the auxiliary elements 15 and 16 are used, which allow the connection points 17 to be placed closer together, leading to advantages in the use as a mobile weighing system.

However, both designs of figure 2 and 3 suffer from one important drawback. The load cell 1 is deformed in such a way that the bolt 20 which is closest to the load cell's centre, is subjected to a tensile strain, which is very much dependent on the applied load. It has been shown that this leads to problems of inaccuracy, due to hysteresis phenomena. This type of load cell should be installed on a flat surface, such as the one shown in figure 1, and the bending force should be directed perpendicular to this surface, and directed towards the surface, as is the case in figure 1. This set-up would ensure minimal strain variation in the bolt 20.

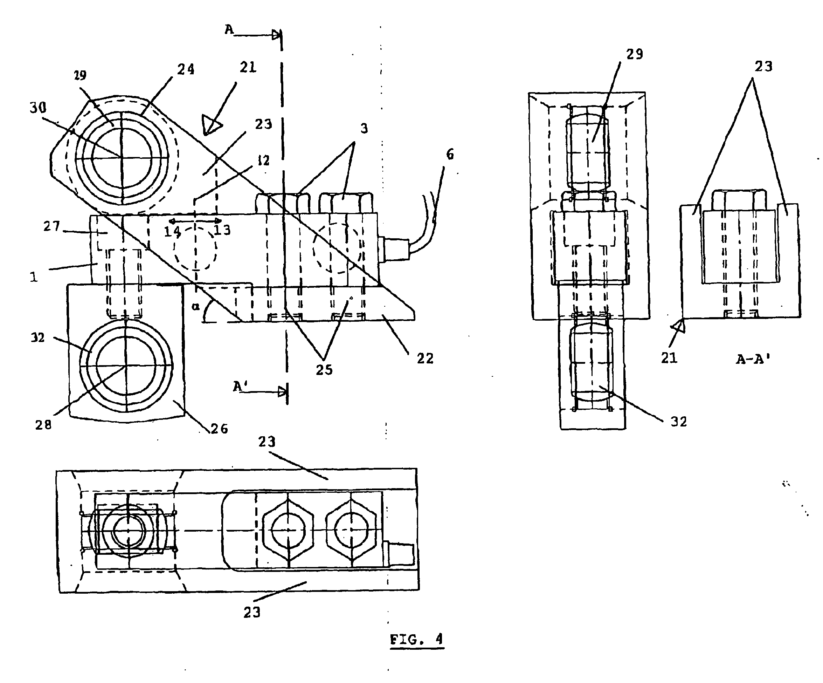

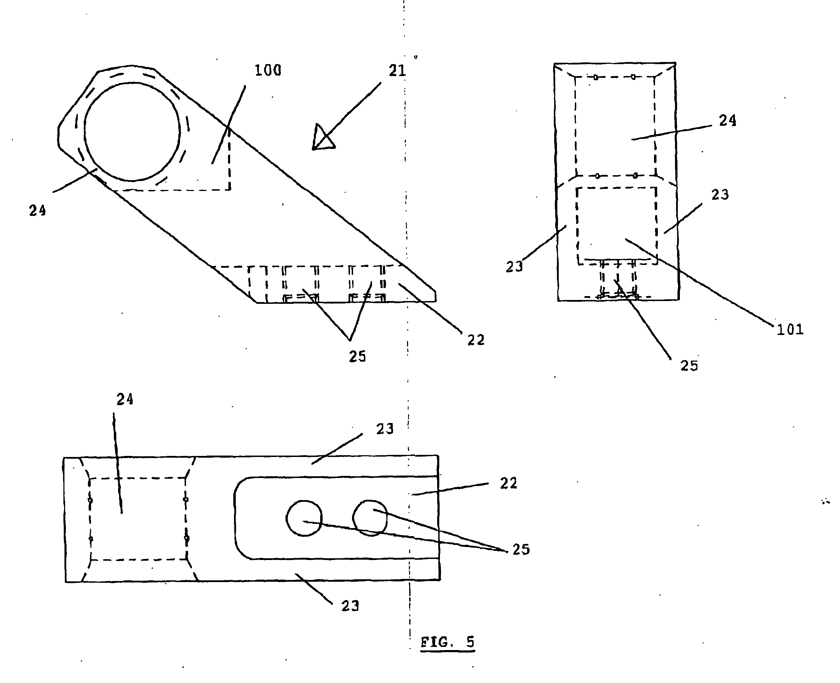

In the design of the invention, shown in figure 4, a special type of auxiliary element 21 is used for connecting the load cell to the supporting structure 2 (not shown). The element 21 is presented in more detail in figure 5. It comprises a base plate 22, to which the load cell can be fixed, preferably bolted, and two sidewalls 23, which rise up on each side of the load cell 1. The part 13 of the load cell which is to the right of the weakened section 12 is bolted to the base plate. Above the other side 14 of the load cell, the walls 23 are connected by a solid part 100, comprising a hole 24, whose centre line is perpendicular to the vertical walls 23. In the embodiment of figure 4, the element 21 is connected to the supporting structure, through a universal joint 29, placed inside the hole 24. The presence of the solid block 100 creates a rectangular opening 101, into which fits the load cell 1. The load cell 1 can be inserted into this opening, until it can be bolted to the base plate 22. For this purpose, holes 25 are present in the base plate 22. In stead of a connection with bolts 3, the load cell may be fixed to the base plate 22 in any other way known in the art. According to a specific embodiment, the load cell and the element 21 form a homogenous block.

The sidewalls 23 preferably have an oblique position (see angle α) with respect to the base plate 22.

A second auxiliary element 26 may be fixed to the load cell, by bolt 27, and is connected to the weighing structure, in point 28, by a universal joint 32. In the preferred embodiment, the points 30 and 28 are placed on the same vertical line. However, small deviations from this situation are possible without departing from the scope of the invention. The point 30 should in any case be positioned on the side of the section 12 which is opposite the part 13.

The same element 21 can be used in a design which is rotated 180° with respect to the one shown in figure 4. In this case, the supporting structure is connected at point 28, to the auxiliary element 26, while the weighing structure is connected to the element 21, at point 30.

The element 21 may be produced in a form which differs from the one shown in figures 4 and 5. The basic characteristics are the base plate 22, and the side walls 23. The walls need not be connected at the top by a solid block 100. They may simply comprise holes or other means which ensure that the element can be properly connected to either the supporting frame or the weighing frame, in a point opposite the part 13. The walls 23 may have a cross section which is different from that of a straight vertical wall. They may be adapted to a special shape of the applied load cell.

The design of figure 4 allows a load to be weighed in a tilted position, due to the presence of the universal joints. Furthermore, the deformation of the load cell 1 while weighing is such that the part 14 of the load cell is bent downwards with respect to the base plate 22 (or the base plate 22 and the part 13 are bent downwards with respect to the part 14, in the case of the 180° rotated position). This way of bending ensures that the strain in bolt 20 remains virtually unchanged during deformation. This is the ideal way of deforming the cell, which improves the accuracy of the measurement.

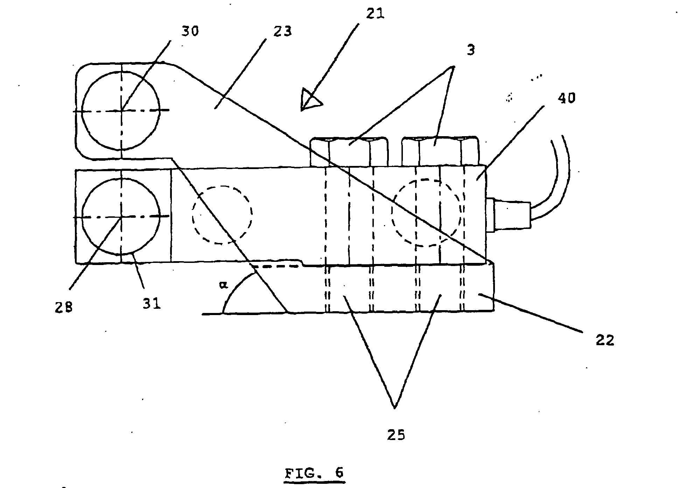

Figure 6 shows an alternative embodiment, which is however equivalent to the one shown in figure 4. The load cell 40 now has a horizontal bore 31 to which the weighing structure can be suspended, preferably through a universal joint. This renders the use of a second auxiliary element 26 superfluous. The sidewalls of the element 21 have a somewhat different shape, which is of course totally equivalent to the one shown in figure 4.

The present invention is related to a weighing device equipped with at least one load cell 1 of the beam type which is installed by way of an auxiliary element having the form of element 21. The invention is equally related to the element 21 itself, to be used in combination with a load cell of the beam type.

## Claims

1. Device for weighing a load, comprising a supporting structure (2), a weighing structure (18), and one or more beam type load cells (1,40), each load cell comprising a first part (13) and a second part (14), with a separating section (12) between both of said parts, one of said parts (13,14) being connected to said supporting structure (2) while the other of said parts (13,14) is connected to said weighing structure (18), least one load cell (1,40) being attached to an auxiliary element (21), said element comprising :
- a base plate (22) to which the first part (13) of said load cell is rigidly connected,
two side walls (23), rigidly connected to said base plate (22), and being placed on either side of said load cell, when the load cell is attached to said element (21).
**characterized in that** said auxiliary element (21) further comprises a means for connecting said element (21) to said supporting structure (2) or to said weighing structure (18) in a point (30) which is placed on the side of said separating section (12) which is opposite said first part (13).

2. The device according to claim 1,
wherein said means for connecting said element (21) comprise a pair of holes in said side walls (23), the line connecting the centre points of said holes being placed on the side of said separating section (12) which is opposite said first part (13).

3. The device according to claim 1
wherein said means for connecting said element comprise a solid block (100) connecting said walls (23), said block (100) comprising a cylindrical hole (24), the centre line of said hole being placed on the side of said separating section (12) which is opposite said first part (13).

4. The device according to any one of the preceding claims, wherein a second auxiliary element (26) is rigidly connected to said second part (14) of said load cell.

5. The device according to any one of the preceding claims, wherein said auxiliary element (21) is connected to said supporting structure (2) or to said weighing structure (18) by a universal joint (29).

6. The device according to claim 4,
wherein said second auxiliary element (26) is connected to said supporting structure (2) or to said weighing structure (18) by a universal joint (32).

7. The device according to claim 1,
wherein said load cell (40) comprises a bore (31) in said second part (14), the centre line of said bore being essentially horizontal when said load cell is placed onto said base plate (22) in an essentially horizontal position.

8. The device according to claim 7,
wherein said load cell (40) is connected to said supporting structure (2) or to said weighing structure (18) by a universal joint.

9. The device according to any one of the preceding claims, wherein said load cell is bolted to said base plate (22), by two or more bolts (3).

10. The device according to any one of the preceding claims, wherein said auxiliary element (21) and said load cell (1,40) form a homogenous block.

11. An auxiliary element (21) for use as a supporting element of a load cell (1,40) of the beam type, said load cell comprising a first part (13) and a second part (14), with a separating section (12)in between, said element (21) comprising :
- a base plate (22) to which the first part (13) of said load cell is to be rigidly connected,
- two side walls (23), rigidly connected to said base plate, and being placed on either side of said load cell, when the load cell is attached to said element (21),
**characterized in that** said auxiliary element (21) further comprises a means for connecting said element (21) to a supporting structure (2) or to a weighing structure (18) in a point (30) which is placed on the side of said separating section (12) which is opposite said first part (13).

## Patentansprüche

1. Vorrichtung zum Wiegen einer Last, umfassend eine Trägerstruktur (2), eine Wägestruktur (18) sowie eine oder mehrere Biegestabwägezellen (1, 40), wobei jede Wägezelle aus einem ersten Teil (13) und einem zweiten Teil (14) besteht, mit einer Trennstrecke (12) zwischen den beiden Teilen, von denen ein Teil (13, 14) mit der Trägerstruktur (2) verbunden ist, während der andere dieser Teile (13, 14) mit der Wägestruktur (18) verbunden ist, wobei mindestens eine der Wägezellen (1, 40) an einem Hilfselement (21) befestigt ist, welches Folgendes umfasst:
- eine Grundplatte (22), an die der erste Teil (13) der Wägezelle starr angeschlossen ist;
- zwei Seitenwände (23), die mit der Grundplatte (22) starr verbunden sind und sich jeweils an einer Seite der Wägezelle befinden, wenn die Wägezelle am besagten Element (21) befestigt ist,
**dadurch gekennzeichnet, dass** das Hilfselement (21) zusätzlich ein Mittel zur Verbindung des Elements (21) mit der Trägerstruktur (2) oder mit der Wägestruktur (18) an einem Punkt (30) aufweist, welcher auf derjenigen Seite der Trennstrecke (12) lokalisiert ist, die dem ersten Teil (13) gegenüber liegt.

2. Vorrichtung nach Anspruch 1, **dadurch gekennzeichnet, dass** das Mittel zur Verbindung des Elements (21) ein Paar Löcher in den Seitenwänden (23) aufweist, wobei die Verbindungslinie zwischen den Mittelpunkten der Löcher auf der Seite der Trennstrecke (12) lokalisiert ist, die dem ersten Teil (13) gegenüber liegt.

3. Vorrichtung nach Anspruch 1, **dadurch gekennzeichnet, dass** das Mittel zur Verbindung des genannten Elements aus einem festen Block (100) besteht, der die besagten Wände (23) verbindet, wobei der Block (100) ein zylindrisches Loch (24) enthält, dessen Mittellinie auf der Seite der Trennstrecke (12) lokalisiert ist, die dem ersten Teil (13) gegenüber liegt.

4. Vorrichtung nach irgendeinem der vorhergehenden Ansprüche, **dadurch gekennzeichnet, dass** ein zweites Hilfselement (26) starr mit dem zweiten Teil (14) der Wägezelle verbunden ist.

5. Vorrichtung nach irgendeinem der vorhergehenden Ansprüche, **dadurch gekennzeichnet, dass** das Hilfselement (21) mit der Trägerstruktur (2) oder mit der Wägestruktur (18) durch ein Universalgelenk (29) verbunden ist.

6. Vorrichtung nach Anspruch 4, wobei das zweite Hilfselement (26) mit der Trägerstruktur (2) oder mit der Wägestruktur (18) durch ein Universalgelenk (32) verbunden ist.

7. Vorrichtung nach Anspruch 1, wobei die Wägezelle (40) einen zylindrischen Hohlraum (31) im zweiten Teil (14) enthält, dessen Mittellinie im Wesentlichen horizontal verläuft, wenn die Wägezelle in einer wesentlich horizontalen Position auf der Grundplatte (22) liegt.

8. Vorrichtung nach Anspruch 7, wobei die Wägezelle (40) mit der Trägerstruktur (2) oder mit der Wägestruktur (18) durch ein Universalgelenk verbunden ist.

9. Vorrichtung nach irgendeinem der vorhergehenden Ansprüche, wobei die Wägezelle durch eine oder mehrere Schrauben (3) an der Grundplatte (22) festgeschraubt ist.

10. Vorrichtung nach irgendeinem der vorhergehenden Ansprüche, wobei das Hilfselement (21) und die Wägezelle (1, 40) einen homogenen Block bilden.

11. Hilfselement (21) zur Verwendung als Trägerelement für eine Biegestabwägezelle (1, 40), bestehend aus einem ersten Teil (13) und einem zweiten Teil (14), mit einer Trennstrecke (12) dazwischen, wobei das Element (21) das Folgende umfasst:
- eine Grundplatte (22), an die der erste Teil (13) der Wägezelle starr angeschlossen ist;
- zwei Seitenwände (23), die mit der Grundplatte starr verbunden sind und sich jeweils an einer Seite der Wägezelle befinden, wenn die Wägezelle am Element (21) befestigt ist,
**dadurch gekennzeichnet, dass** das Hilfselement (21) zusätzlich ein Mittel zur Verbindung des Elements (21) mit einer Trägerstruktur (2) oder mit einer Wägestruktur (18) an einem Punkt (30) aufweist, welcher auf derjenigen Seite der Trennstrecke (12) lokalisiert ist, die dem ersten Teil (13) gegenüber liegt.

## Revendications

1. Dispositif pour peser une charge, comprenant une structure de support (2), une structure de pesage (18) et une ou plusieurs cellules de charge (1, 40) de type poutre, chaque cellule de charge comprenant une première partie (13) et une deuxième partie (14), avec une section de séparation (12) entre lesdites deux parties, une desdites parties (13, 14) étant raccordée à ladite structure de support (2), tandis que l'autre desdites parties (13, 14) est raccordée à ladite structure de pesage (18),
au moins une cellule de charge (1, 40) étant raccordée à un élément auxiliaire (21), ledit élément comprenant :
- une plaque de base (22) à laquelle la première partie (13) de ladite cellule de charge est raccordée de manière rigide,
- deux parois latérales (23) raccordées de manière rigide à ladite plaque de base (22) et placées de chaque côté de ladite cellule de charge lorsque la cellule de charge est fixée audit élément (21),
**caractérisé en ce que** ledit élément auxiliaire (21) comprend en outre un moyen pour raccorder ledit élément (21) à ladite structure de support (2) ou à ladite structure de pesage (18) en un point (30) qui est placé sur le côté de ladite section de séparation (12) qui est opposé à ladite première partie (13).

2. Dispositif selon la revendication 1, dans lequel ledit moyen pour raccorder ledit élément (21) comprend une paire de trous dans lesdites parois latérales (23), la ligne reliant les points centraux desdits trous étant placée sur le côté de ladite section de séparation (12) qui est opposé à ladite première partie (13).

3. Dispositif selon la revendication 1, dans lequel ledit moyen pour raccorder ledit élément comprend un bloc solide (100) raccordant lesdites parois (23), ledit bloc (100) comprenant un trou cylindrique (24), la ligne centrale dudit trou étant placée sur le côté de ladite section de séparation (12) qui est opposé à ladite première partie (13).

4. Dispositif selon l'une quelconque des revendications précédentes, dans lequel un deuxième élément auxiliaire (26) est raccordé de manière rigide à ladite deuxième partie (14) de ladite cellule de charge.

5. Dispositif selon l'une quelconque des revendications précédentes, dans lequel ledit élément auxiliaire (21) est raccordé à ladite structure de support (2) ou à ladite structure de pesage (18) par un joint universel (29).

6. Dispositif selon la revendication 4, dans lequel ledit deuxième élément auxiliaire (26) est raccordé à ladite structure de support (2) ou à ladite structure de pesage (18) par un joint universel (32).

7. Dispositif selon la revendication 1, dans lequel ladite cellule de charge (40) comprend un alésage (31) dans ladite deuxième partie (14), la ligne centrale dudit alésage étant essentiellement horizontale lorsque ladite cellule de charge est placée sur ladite plaque de base (22) en position essentiellement horizontale.

8. Dispositif selon la revendication 7, dans lequel ladite cellule de charge (40) est raccordée à ladite structure de support (2) ou à ladite structure de pesage (18) par un joint universel.

9. Dispositif selon l'une quelconque des revendications précédentes, dans lequel ladite cellule de charge est boulonnée à ladite plaque de base (22) par deux boulons (3) ou plus.

10. Dispositif selon l'une quelconque des revendications précédentes, dans lequel ledit élément auxiliaire (21) et ladite cellule de charge (1, 40) forment un bloc homogène.

11. Elément auxiliaire (21) pour utilisation comme élément de support d'une cellule de charge (1, 40) du type poutre, ladite cellule de charge comprenant une première partie (13) et une deuxième partie (14), avec une section de séparation (12) entre elles, ledit élément (21) comprenant :
- une plaque de base (22) à laquelle la première partie (13) de ladite cellule de charge doit être raccordée de manière rigide,
- deux parois latérales (23), raccordées de manière rigide à ladite plaque de base et placées des deux côtés de ladite cellule de charge lorsque la cellule de charge est fixée audit élément (21),
**caractérisé en ce que** ledit élément auxiliaire (21) comprend en outre un moyen pour raccorder ledit élément (21) à une structure de support (2) ou à une structure de pesage (18) en un point (30) qui est placé sur le côté de la section de séparation (12) qui est opposé à ladite première partie (13).
